# EUROPÄISCHE PATENTSCHRIFT

(11) **EP 0 880 931 B1**
(45) Veröffentlichungstag und Bekanntmachung des Hinweises auf die Patenterteilung: **15.11.2000**
(21) Anmeldenummer: 98109025.1
(22) Anmeldetag: 18.05.1998
(51) Int. Cl.: A47J 43/08

(54) **Elektrische Küchenmaschine**
Electric kitchen appliance
Machine domestique électrique

(30) Priorität: 26.05.1997 DE 19721978
(43) Veröffentlichungstag der Anmeldung: 02.12.1998
(73) Patentinhaber: BSH Bosch und Siemens Hausgeräte GmbH, 81669 München (DE)
(72) Erfinder: Brezovnik, Peter, Dipl.-Ing., 3330 Mozirje (SI); Oblak, Aleksander, Dipl.-Ing., 3332 Recice/Savinji (SI); Augustin, Helmut, Dipl.-Ing., 83339 Chieming (DE)

(56) Entgegenhaltungen:
- EP-A- 0 570 685
- DE-B- 1 186 588
- DE-B- 2 928 787
- GB-A- 2 303 537
- US-A- 3 109 949

## Beschreibung

Die vorliegende Erfindung betrifft eine elektrische Küchenmaschine mit einem Gehäuse, in dem ein Elektromotor mit einer Motorwelle angeordnet ist, die über ein Getriebe zumindest drei konzentrische Abtriebe mit unterschiedlicher Drehzahl antreibt, deren gemeinsame Drehachse räumlich von der Motorwelle beabstandet ist, und an welche Abtriebe in einem auf dem Gehäuse abstellbaren Arbeitsbehältnis umlaufende Arbeitswerkzeuge kuppelbar sind.

Eine derartige Küchenmaschine ist bekannt aus der EP 0 022 465, wobei deren Antriebseinheit mit einer Abtriebswelle, deren Abtriebsende als erster Abtrieb für ein erstes aufsteckbares Werkzeug ausgebildet ist. Koaxial zur Abtriebswelle ist eine erste Abtriebshülse als zweiter Abtrieb für ein zweites aufsteckbares Werkzeug angeordnet. Dabei ist die erste Antriebshülse mittels eines ersten Untersetzungsgetriebes von der Abtriebswelle antreibbar. Um einen dritten Abtrieb für ein drittes Werkzeug zu erhalten, ist zwischen der Abtriebswelle und der ersten Abtriebshülse eine zweite zurückgesetzte, zweite Abtriebshülse gelagert, die stirnseitig als dritter Abtrieb dient und mittels eines zweiten Untersetzungsgetriebes von der Abtriebswelle antreibbar ist. Parallel zu der gemeinsamen Drehachse der drei konzentrischen Abtriebe und davon beabstandet dient das obere Ende der vertikalen Motorwelle bzw. das darauf aufgesetzte Kupplungselement als vierter Abtrieb für eine vierte Art von Küchengeräten, die mit hoher Drehzahl antreibbar sind.

In EP-A-570 685 ist eine Kompaktküchenmaschine, auch Food-Processor genannt, gemäß dem Oberbegriff des Anspruchs 1 beschrieben, bei der zwei konzentrische Abtriebe über zwei verschiedene Zahnriemen mit Zahnriemenrädern unterschiedlichen Durchmessers angetrieben werden. Der schnelle Abtrieb dient zum Antreiben eines Schneebesens, der langsame zum Antrieb eines Knethakens. Nachteilig an dieser Konstruktion ist, daß mit diesem Getriebe nur ein geringes Untersetzungsverhältnis realisierbar ist.

Aufgabe der vorliegenden Erfindung ist es, eine Küchenmaschine mit konzentrischen Abtrieben bereitzustellen, auf denen möglichst viele Bearbeitungsvorgänge unterschiedlicher Drehzahl durchgeführt werden können.

Erfindungsgemäß (vgl. Anspruch 1) ist dies dadurch erreicht, daß bei einer elektrischen Küchenmaschine nach dem Oberbegriff des Patentanspruches 1 der erste Abtrieb der schnellste ist und mit einer für ein Mixerwerkzeug geeigneten Drehzahl dreht, und daß das Getriebe zumindest zwei unabhängig voneinander drehbar gelagerte Getriebeeingangsverzahnungen aufweist, so daß der erste Abtrieb außer direktem Eingriff mit den langsameren zweiten und dritten Abtrieben antreibbar ist. Das Mixerarbeitsbehältnis ist also nicht mehr auf einen von den konzentrischen Abtrieben räumlich getrennten Abtrieb abzustellen. Alle Bearbeitungsvorgänge, wie z.B. Kneten, Rühren, Schnitzeln, Mixen, mit ihren unterschiedlichen Drehzahlen und Drehmomenten sind an einer Stelle der Küchenmaschine mit den unterschiedlichen Arbeitsbehältnissen durchführbar. Indem das Getriebe zwei voneinander unabhängige Getriebeeingänge aufweist, muß die Drehung des zweiten und der weiteren Abtriebe nicht von dem sehr schnellen ersten Abtrieb, beispielsweise über eine Verzahnung, abgeleitet werden. Durch diese Entkopplung zwischen dem ersten Abtrieb und den weiteren Abtrieben ist die Geräusch- und Wärmeentwicklung des Getriebes bei einfachem Aufbau deutlich reduziert. Dadurch wird es möglich, große Teile des Getriebes trotz der hohen Drehzahl des ersten Abtriebes und hoher Drehmomente aus Kunststoff zu fertigen.

Um einen möglichst kompakten Aufbau der Küchenmaschine zu erreichen, weist das Getriebe ein Planetengetriebe auf, das den zweiten und dritten Abtrieb verbindet. Zur Steigerung der Anzahl der Abtriebe ist das Planetengetriebe vorteilhafterweise mehrstufig ausgebildet. Um den Aufbau des Getriebes möglichst einfach zu halten, bildet der zweite Abtrieb ein Sonnenrad des Planetengetriebes. Vorteilhafterweise ist die Welle des ersten Abtriebes im Inneren einer als Hohlwelle ausgebildeten Welle des zweiten Abtriebes gelagert. Mit dieser Art der Lagerung ist im Unterschied zur direkten Lagerung im Boden des Gehäuses der Küchenmaschine eine verspannungsfreie Montage der Welle des ersten Abtriebes mit dem Planetengetriebe möglich.

Gemäß einer bevorzugten Ausführungsform ist der erste Abtrieb mittels mindestens eines ersten Riemens mit der Motorwelle verbunden. Dadurch ist auf kostengünstige Weise der Abstand zwischen dem ersten Abtrieb und der Motorwelle mit einem Übersetzungsverhältnis von im wesentlichen 1:1 mit einem großen Wirkungsgrad verbindbar. Wenn es vorteilhaft ist, können auch zwei Riemen über eine Zwischenwelle hintereinander geschaltet sein.

Der Aufbau ist weiter dadurch vereinfacht, daß der zweite Abtrieb mittels mindestens eines zweiten Riemens mit der Motorwelle verbunden ist.

Gemäß einer bevorzugten Ausführungsform nimmt die Geschwindigkeit der konzentrischen Abtriebe von innen nach außen ab. Damit ist außen bei der kleinsten Drehzahl das größte Drehmoment übertragbar und der schnellste und innerste Abtrieb ist bezüglich seines Unwuchtverhaltens optimal gestaltbar. Weiterhin sind durch die von innen nach außen abnehmenden Drehzahlen die Drehzahlunterschiede zwischen benachbarten Abtrieben möglichst gering gehalten. Damit ist eine Verringerung der Geräusch- und Wärmeentwicklung verbunden.

Vorteilhafterweise drehen die konzentrischen Abtriebe mit Drehzahlen zwischen etwa 200 bis 12000 Umdrehungen pro Minute. Damit sind auf den konzentrischen Abtrieben alle im Alltagsgebrauch einer Küchenmaschine erforderlichen Betriebsarten vom Schnitzeln bis zum Mixen an einem Ort, nämlich über den konzentrischen Abtrieben, realisierbar. Aufwendige Zusatzgetriebe in den Werkzeugen können entfallen.

Zur Verringerung der Geräusch- und Wärmeentwicklung weisen die konzentrischen Abtriebe den gleichen Drehsinn auf. Dadurch sind die Geschwindigkeitsunterschiede benachbarter Abtriebe minimiert.

Um die hohe Drehzahl des Elektromotors für den Mixerbetrieb nutzen zu können, dreht die erste Abtrieb im wesentlichen mit der Drehzahl der Motorwelle ohne aufwendige und mit Leistungsverlusten verbundene Unter- und Übersetzungsgetriebe.

Eine sehr kompakte und für alle Betriebsarten mit den unterschiedlichsten Drehmoment- und Drehzahlanforderungen geeignete Küchenmaschine kann bereitgestellt werden, wenn die Küchenmaschine vier konzentrische Abtriebe aufweist.

Nachfolgend ist anhand schematischer Darstellungen ein Ausführungsbeispiel der erfindungsgemäßen Antriebseinheit beschrieben.

Es zeigen
- Fig. 1: in einer perspektivischen Ansicht eine Küchenmaschine mit einer darauf abgestellten Arbeitsschüssel.
- Fig. 2: stark vereinfacht in einer perspektivischen Darstellung das Motorlagerteil und das Getriebelagerteil der Küchenmaschine.
- Fig. 3: eine schematisierte Schnittdarstellung im wesentlichen entlang der Linie III-III in Fig. 2 im Bereich der Anlageflächen des Motor- und des Getriebelagerteils.
- Fig. 4a und b: einen Riemenspanner der Antriebseinheit in zwei unterschiedlichen Ansichten in vergrößertem Maßstab.
- Fig. 5: stark vereinfacht ausschnittweise den Motorlagerteil und den Getriebelagerteil gemäß Fig. 2 in einer Draufsicht.
- Fig. 6: in einer Seitenansicht in vergrößertem Maßstab eine im Getriebelagerteil gehalterte Zwischenwelle und
- Fig. 7: abschnittsweise den Getriebelagerteil und eine darin eingesetzte Getriebeeinheit im wesentlichen entlang der Linie VII-VII in Fig. 2.

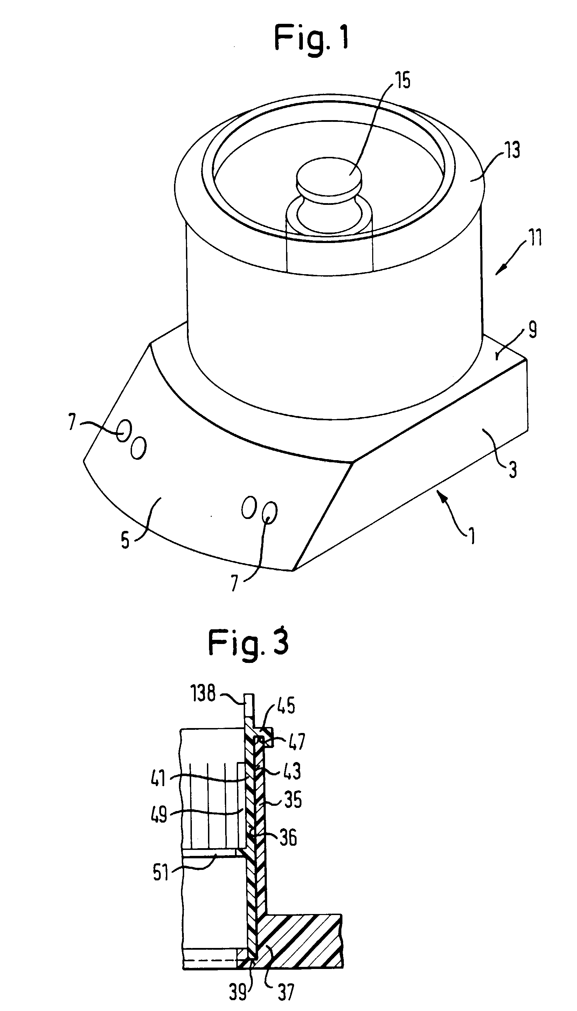

Eine flache Küchenmaschine 1 mit einem nicht gezeigtem Boden und einer darauf gesetzten Haube 3 weist eine schräg nach vorne abfallende Bedienblende 5 auf (Fig. 1). In dieser sind Anzeige- und Bedienelemente 7 der Küchenmaschine angeordnet. Auf einer im wesentlichen ebenen Arbeitsfläche 9 der Küchenmaschine 1 ist eine Arbeitsschüssel 11 befestigt, wie nachfolgend erläutert wird. Die Arbeitsschüssel 11 ist mit einem transparenten Deckel 13 verschlossen. In der Arbeitsschüssel 11 wird ein Knethaken 15 oder in weiteren nicht gezeigten Arbeitsbehältnissen werden weitere Arbeitswerkzeuge durch einen in der Küchenmaschine 1 angeordneten Abtrieb angetrieben, wie nachfolgend erläutert ist.

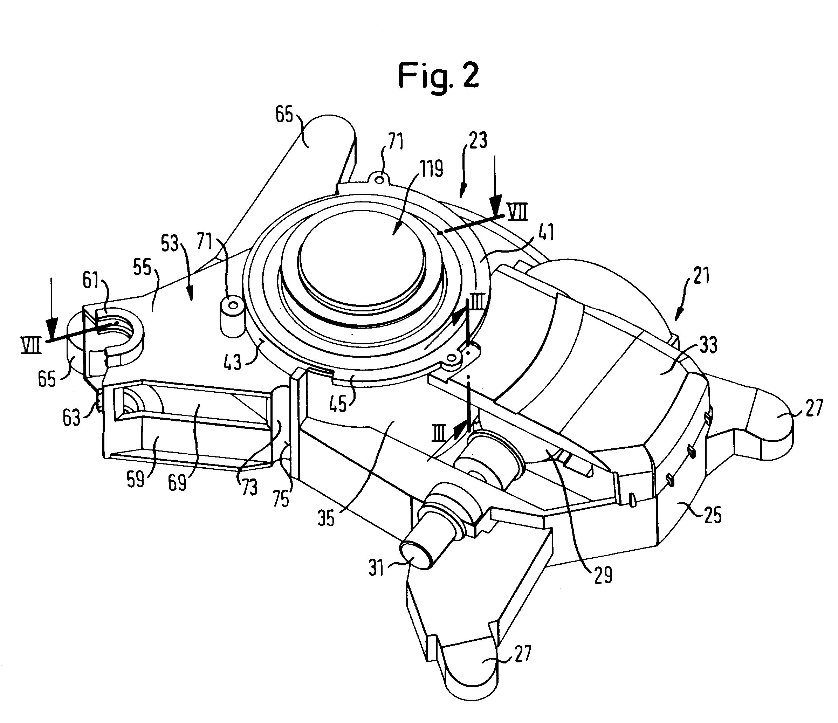

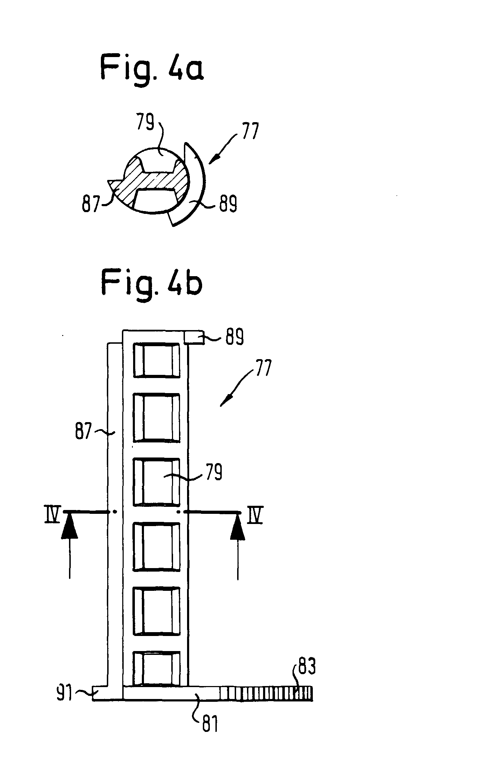

Zwischen der Haube 3 und dem Boden der Küchenmaschine 1 sind ein Motorlagerteil 21 und ein Getriebelagerteil 23 aus Kunststoff angeordnet (Fig. 2). Der Motorlagerteil 21 weist in seinem Bodenbereich eine Grundplatte 25 auf, deren mechanische Stabilität insbesondere durch an deren Unterseite ausgebildete Versteifungsrippen erhöht ist. Von der Grundplatte 25 weg erstrecken sich zwei erste Küchenmaschinenbeine 27, an deren Unterseite in an sich bekannter Weise jeweils Abstellfüße der Küchenmaschine 1 befestigt sind (nicht gezeigt), die durch Öffnungen des Bodens ragen. An dem Motorlagerteil 21 ist in einem entsprechend ausgebildeten Aufnahmebereich ein Elektromotor 29 im wesentlichen horizontal eingelegt, wodurch dessen Motorwelle 31 sich im wesentlichen horizontal von dem Motorlagerteil 21 weg erstreckt. Der Elektromotor 29 ist zusätzlich durch eine an dem Motorlagerteil 21 bzw. dessen Grundplatte 25 befestigte Haube 33 gehaltert. Zur Vereinfachung der Darstellung in Fig. 2 sind die Elektronik des Elektromotors 29 und weitere an sich bekannte Komponenten der Küchenmaschine nicht dargestellt. Seitlich neben dem Elektromotor 29 ist der Motorlagerteil 21 als klauenförmige Lagerschale 35 mit einer kreiszylinderabschnittförmigen Innenwandung 36 ausgebildet, die als Anlagefläche dient und sich im wesentlichen über die gesamte Höhe des Getriebelagerteiles 21 erstreckt. Senkrecht dazu erstreckt sich die Innenwandung 36 über einen Kreisabschnitt von etwa 210° (Fig. 2, Fig. 3). Ein unterer Randabschnitt 37 der klauenförmigen Lagerschale 35 weist über den vollständigen Umfangsbereich von etwa 210° eine erste Nut 39 auf (Fig. 3).

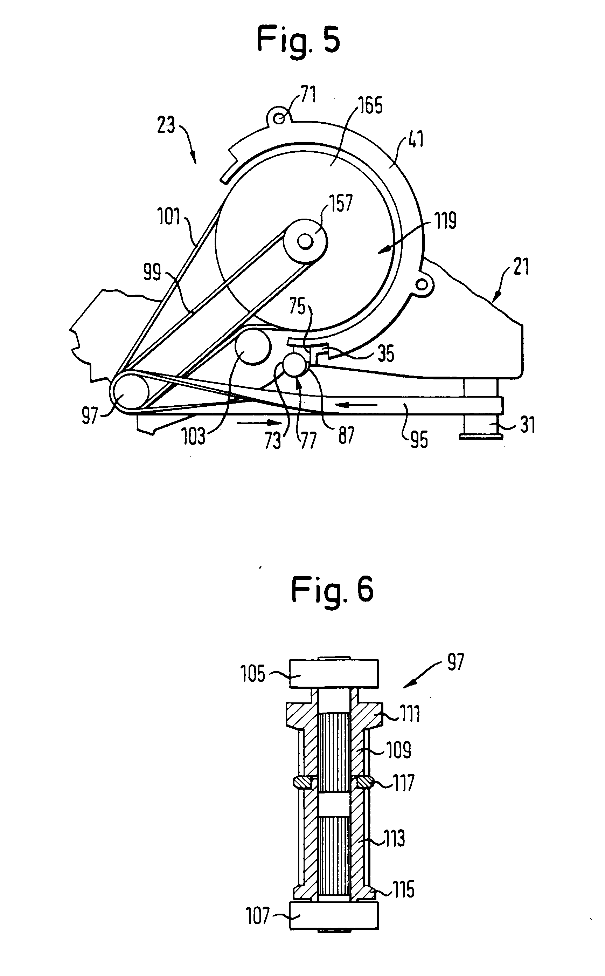

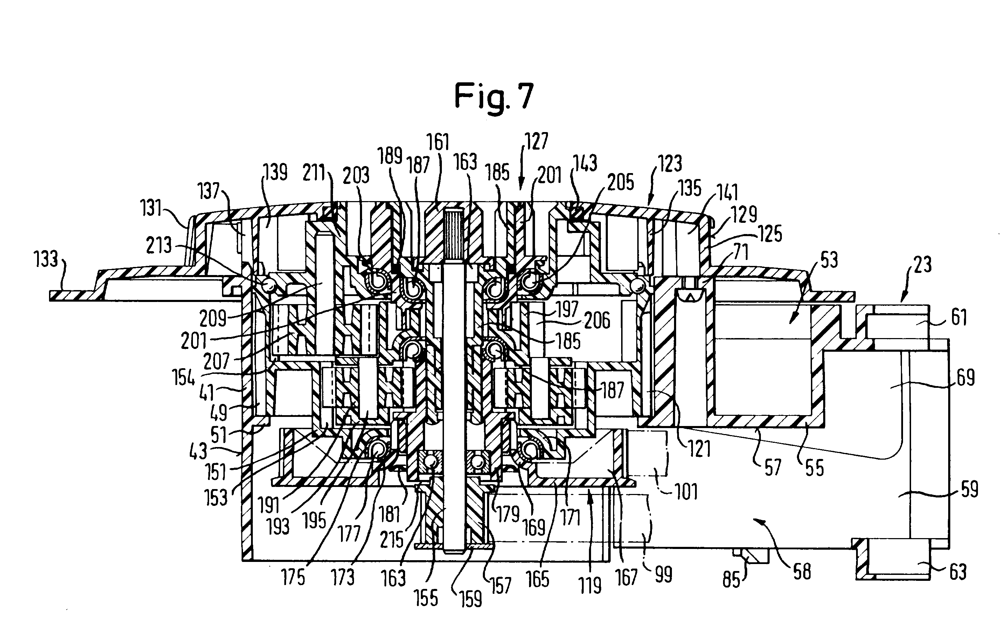

In die Lagerschale 35 ist von oben ein Getriebelagerzylinder 41 des Getriebelagerteils 23 gesteckt. Beim Ineinanderstecken parallel zur Mittelachse der kreiszylinderabschnittförmigen Innenwandung 36 gleitet eine entsprechend ausgebildete zylindermantelflächenförmige Außenwandung 43 des Getriebelagerzylinders 41 entlang der Innenwandung 36 der Lagerschale 35. Um eine möglichst spielfreie Montage sicherzustellen, sind an der Innenwandung 36 Längsrippen ausgebildet (nicht gezeigt). Die Endposition ist erreicht, wenn der untere Rand des Getriebelagerzylinderes 41 in der ersten Nut 39 der Lagerschale 35 steckt und der obere Rand der Lagerschale 35 in einer am oberen Randabschnitt 45 des Getriebelagerzylinders 41 entsprechend ausgebildeten zweiten Nut 47 steckt (Fig. 3). An der Innenumfangswandung des Getriebelagerzylinders 41 erstrecken sich in der oberen Hälfte des Zylinders 41 Lagerrippen 49, in denen eine nachfolgend beschriebene Getriebeeinheit 119 drehfest gehaltert ist (Fig. 7). Unterhalb der Lagerrippen 49 erstreckt sich umfangsseitig ein nach innen hervorspringender Absatz 51, der ebenfalls zur Halterung der Getriebeeinheit 119 dient. Die Getriebeeinheit 119 ist in Fig. 2 im Unterschied zur Fig. 7 lediglich stark schematisiert dargestellt und in Fig. 3 nicht dargestellt. Seitlich von dem Getriebelagerzylinder 41 erstreckt sich in horizontaler Richtung von diesem ein Getriebezylinderarm 53, der in seiner oberen Hälfte einen Hauptarm 55 mit einer Unterseite 57 aufweist. Unterhalb der Unterseite 57 des Hauptarmes 55 bzw. des ringförmigen Absatzes 51 ist der Getriebelagerzylinder 41 über einen Winkelbereich von etwa 120° offen und bildet dadurch eine Riemenöffnung 58 (Fig. 7) im Getriebelagerteil 23. Von dieser aus erstrecken sich seitlich unterhalb des Getriebezylinderarms 53 zwei Lagerarme 59 (Fig. 2, Fig. 7). In dem von der Getriebeeinheit 119 abgewandten Endabschnitt weisen der Hauptarm 55 und die beiden Lagerarme 59 eine obere Lagerschale 61 und eine untere Lagerschale 63 zur Lagerung einer nachfolgend erläuterten Zwischenwelle 97 (Fig. 6) auf. Weiterhin erstrecken sich seitlich von dem Getriebelagerzylinder 41 bzw. dem Lagerarm 59 entsprechend den ersten Küchenmaschinenbeinen 27, zweite Küchenmaschinenbeine 65. Zwischen dem Hauptarm 55 und dem dem Elektromotor 29 zugewandten Lagerarm 59 ist ein Riemenfenster 69 (Fig. 2, Fig. 7) vorgesehen.

Zur Befestigung einer nachfolgend erläuterten Abdeckplatte 123 (Fig. 7) an dem Getriebelagerteil 23 bzw. dem Getriebelagerzylinder 41 sind an diesen Schraubaugen und - hülsen 71 ausgebildet. Über die Höhe des Getriebezylinderarmes 53 ist in diesem eine sich vertikal erstreckende, rinnenförmige Riemenspanner-Lagerschale 73 und gering davon beabstandet an dem Motorlagerteil 21 eine Riemenspanner-Wandung 75 ausgebildet (Fig. 2, Fig. 5). In den dadurch gebildeten Aufnahmebereich ist ein in den Figuren 4a und 4b detailliert gezeigter Riemenspanner 77 zwischen den Motorlagerteil 21 und den Getriebelagerteil 23 geklemmt.

Dazu weist der Riemenspanner 77 einen im wesentlichen zylinderförmigen Hauptkörper 79 auf, an dessem unteren Endabschnitt sich ein senkrecht von der Achse des Hauptkörpers 79 abstehender, sichelförmiger Betätigungsarm 81 erstreckt (Fig. 4a, 4b). An der schmalen Außenwandung des Betätigungsarmes 81 ist eine Verzahnung 83 ausgebildet, die zum Spannen des Riemens, wie nachfolgend beschrieben ist, mit einem an der Unterseite des Getriebelagerteils 23 ausgebildeten Rastzahn 85 (Fig. 7) zusammenwirkt. Über im wesentlichen die gesamte Höhe des Riemenspanners 77 erstreckt sich ein Klemmnocken 87. Ein oberer Vorsprung 89 und ein unterer Vorsprung 91 übergreifen jeweils den unteren Randabschnitt 37 der Lagerschale 35 des Motorlagerteils 21 und die Oberseite des Hauptarms 55 des Getriebelagerteils 23 und begrenzen dadurch den vertikalen Abstand beider. Zusätzlich ist dadurch der Riemenspanner 77 an dem Getriebelagerteil 23 bzw. dem Motorlagerteil 21 in dem entsprechenden Aufnahmebereich gehaltert.

In Fig. 5 ist ausschnittsweise und stark vereinfacht gezeigt, wie ein halbgekreuzter Zwischenwellenriemen 95 zwischen einer in der oberen und unteren Lagerschale 61, 63 des Getrieberingarmes 53 gehalterten Zwischenwelle 97 (Fig. 6) gespannt ist. In Fig. 5 ist durch zwei Pfeile die Laufrichtung des Zwischenwellenriemens 95 gezeigt. Auf der Zwischenwellel 97 laufen zudem ein Mixerriemen 99 und ein Zusatzriemen 101, die mit entsprechenden Zahnriemenrädern 157, 165 der Getriebeeinheit 119 verbunden sind (Fig. 5, Fig. 7). Dabei ist der Zusatzriemen 101 zusätzlich durch eine in dem Getriebelagerteil 23 gehalterte Spannrolle 103 gespannt. Die Zwischenwelle 97 weist ein in der oberen Lagerschale 61 des Getriebelagerteils 23 gelagertes oberes Kugellager 105 und ein in der unteren Lagerschale 63 gelagertes unteres Kugellager 107 auf. Mit der eigentlichen Welle der Zwischenwelle 97 ist ein erstes Zwischenritzel 109 mit einem oberen ersten Bund 111 drehfest verbunden. Darunter ist an der eigentlichen Welle entsprechend ein zweites Zwischenritzel 113 mit einem unteren zweiten Bund 115 verbunden. Die beiden Ritzel und deren Laufbereiche sind durch eine auf die Welle gepreßte Bordscheibe 117 voneinander getrennt.

Der Zusammenbau des Motor- und des Getriebelagerteils 21, 23 bzw. das Spannen der Riemen 95, 99, 101 erfolgt vereinfacht wie folgt: Der Motorlagerteil 21 und der Getriebelagerteil 23 werden wie oben beschrieben ineinander gesteckt. Aufgrund der klauenförmigen Ausbildung der Lagerschale 35 und der Gestaltung des Getriebelagerzylinders 41 sind die beiden Lagerteile 21, 23 durch das Ineinanderstecken bereits relativ stabil miteinander verbunden (Fig. 2, 3, 5). Sie stützen sich über einen großen Flächenbereich aneinander ab und übergreifen sich gegenseitig. Die Lagerteile 21, 23 können jedoch noch relativ zueinander gedreht werden. Zwischen dem Ritzel der Motorwelle 31 und dem ersten Zwischenritzel 109 der Zwischenwelle 97 verläuft der Zwischenwellenriemen 95 halbgekreuzt. Infolge der Laufrichtung des Zwischenwellenriemens 95 läuft dieser von der Höhe der Motorwelle 31 geringfügig schräg nach oben durch das Riemenfenster 69 auf das erste Zwischenritzel 109. Unterhalb der Bordscheibe 117 läuft der Zusatzriemen 101 in der oberen Hälfte des zweiten Zwischenritzels 113 zu dem zweiten Zahnriemenrad 165 (Fig. 5, 7). Direkt darunter verläuft auf dem zweiten Zwischenritzel 113 nahe dem Boden des Getriebelagerteils 23 und damit des Bodens der Küchenmaschine 1 der Mixerriemen 99 zum ersten Zahnriemenrad 157 der Getriebeeinheit 119 (Fig. 5, 7). Zum Spannen des Zwischenwellenriemens 95 wird der Getriebelagerteil 23 in der Lagerschale 35 gemäß Fig. 5 im Uhrzeigersinn gedreht und damit der Abstand zwischen der Zwischenwelle 97 und der Motorwelle 31 vergrößert. Dies wird dadurch erreicht, daß der Riemenspanner 77 an dem Betätigungsarm 81 in dem durch die Riemenspanner-Lagerschale 73 und der Riemenspanner-Wandung 75 gebildeten Aufnahmebereich gemäß Fig. 5 im Uhrzeigersinn gedreht wird. Dadurch drückt der Klemmnocken 87 gegen die Riemenspanner-Wandung 75, wodurch der Abstand zwischen beiden und damit auch zwischen der Motorwelle 31 und der Zwischenwelle 97 vergrößert wird. Wenn der Zwischenwellenriemen 95 ausreichend gespannt ist, ist die relative Drehposition des Getriebelagerteils 23 zum Motorlagerteil 21 in dieser Stellung durch das Zusammenwirken der Verzahnung 83 des Riemenspanners 77 und des Rastzahns 85 des Getriebelagerteils 23 festgelegt. Zusätzlich kann durch Klebemitttel oder eine weitere Verschraubung die relative Stellung des Motorlagerteils 21 zu dem Getriebelagerteil 23 fixiert werden. Da sich die Zwischenwelle 97 beim Spannen des Zwischenwellenriemens 95 auf einem Kreis um die gemeinsame Mittelachse der Innenwandung 36 der Lagerschale 35 bzw. der Außenwandung 43 des Getriebelagerzylinders 41 dreht und in dieser Achse auch das erste und zweite Zahnriemenrad 157, 165 drehbar gehaltert sind, ändert sich der Abstand zwischen diesen und der Zwischenwelle 97 nicht. Das Spannen des Zusatzriemens 101 mit Hilfe der Spannrolle 103 kann deshalb unabhängig von dem Spannen des Zwischenwellenriemens 95 erfolgen. Die Länge des Mixerriemens 99 ist derart bemessen, daß dessen Spannen mit zusätzlichen Hilfsmitteln nicht erforderlich ist. Dabei verläuft der Zwischenwellenriemen 95 etwa in der Hälfte der Höhe der aneinanderliegenden Innenwandung 36 und Außenwandung 43 (Fig. 7).

In den Getriebelagerzylinder 41 ist von oben die komplett vormontierte Getriebeeinheit 119 eingesetzt (Fig. 7). Die Getriebeeinheit weist Außenrippen 121 auf, wie nachfolgend beschrieben ist, die mit den Lagerrippen 49 des Getriebelagerzylinderes 41 zusammenwirken und einen drehfesten Sitz der Getriebeeinheit 119 in dem Getriebelagerteil 23 sicherstellen. Zugleich liegen die Außenrippen 121 der Getriebeeinheit 119 an ihren unteren Endabschnitten jeweils auf dem Absatz 51 des Getriebelagerteils 23 auf, wodurch die Getriebeeinheit 119 axial nach unten abgestützt ist. Nach oben ist die Getriebeeinheit 119 durch eine runde Abdeckplatte 123 aus Kunststoff gesichert. Diese weist zwei kreisförmige Stufen auf und bildet durch die obere Stufe einen zylinderförmigen Plattenabsatz 125, der in seiner schalenförmigen Deckwandung mittig eine kreisförmige Abtriebsöffnung 127 aufweist. An einer Seitenwandung 129 des Plattenabsatzes 125 stützt sich umfangsseitig eine entsprechend ausgebildete, nicht gezeigte Schürze der Arbeitsschüssel 11 ab. Die Arbeitsschüssel 11 ist weiterhin mit nicht gezeigten, an sich bekannten Befestigungsmitteln ausgebildet, die mit den an der Seitenwandung 129 ausgebildeten Verriegelungselementen 131 bajonettartig zusammenwirken. Unterhalb der zweiten Stufe der Abdeckplatte 123 erstreckt sich ringförmig ein flacher Plattenrand 133, auf dem unter Zuhilfenahme einer ringförmigen Dichtung, die ebenfalls in diesem Bereich kreisförmig ausgeschnittene Haube 3 stufenlos und spaltfrei aufliegt. An der Unterseite der Abdeckplatte 123 erstreckt sich von der Deckwandung des Plattenabsatzes 125 eine ringförmige Plattenschürze 135. An deren Außenseite sind umfangseitig zahlreiche Plattennuten 137 ausgebildet, in die entsprechend am oberen Randabschnitt 45 des Getriebelagerzylinderes 41 ausgebildete Federn 138 steckbar sind (Fig. 3). Dadurch ist die Abdeckplatte 123 drehfest mit dem Getriebelagerteil 23 verbunden und kann durch die Arbeitsschüssel 11 in die Abdeckplatte 123 eingeleitete Kräfte in das Getriebelagerteil 23 weiterleiten. An der Innenumfangswandung der Plattenschürze 135 sind umfangsseitig sich von der Unterseite der Deckwandung des Plattenabsatzes 125 nach unten erstreckende Getriebeanschläge 139 zu dessen axialer Sicherung vorgesehen. Zusätzlich sind an der Unterseite der Abdeckplatte 123 drei Plattenschraubhülsen 141 angeformt, durch die zusammen mit den Schraubaugen bzw. -hülsen 71 die Abdeckplatte 123 zusätzlich an dem Getriebelagerteil 23 befestigbar ist. Zwischen dem Randbereich der Abtriebsöffnung 127 und der Getriebeeinheit 119 ist eine ringförmige Abdeckplattendichtung 143 eingelegt.

Die Getriebeeinheit 119 weist ein äußeres Hohlrad 151 auf, das in seinem oberen Bereich umfangsseitig die Außenrippen 121 zur drehfesten Lagerung der Getriebeeinheit 119 in den Lagerrippen 49 des Getriebelagerzylinders 41 besitzt. Dabei stützt sich das Hohlrad 151 mit den Außenrippen 121 auch auf dem Absatz 51 des Getriebelagerzylinderes 41 ab. Zudem weist das Hohlrad 151 eine erste und eine zweite Innenverzahnung 153, 154 auf, an der, wie nachfolgend erläutert ist, Zahnräder eines Planetengetriebes abrollen. In der Mitte der Getriebeeinheit 119 ist eine Abtriebswelle 155 drehbar gelagert. Im unteren Endabschnitt der Abtriebswelle 155 ist an diesem drehfest das erste Zahnriemenrad 157 (Fig. 5, 7) mit einer aufgepreßten Anlaufscheibe 159 befestigt. An dem entgegengesetzten Endabschnitt ist auf die Abtriebswelle 155 eine erste Kupplungsbuchse 161 gepreßt, die sich etwa bis in die Höhe der Deckwandung des Plattenabsatzes 125 der Abdeckplatte 123 erstreckt. An die erste Kupplungsbuchse 161 ist ein entsprechend ausgebildetes, in einem geeigneten Arbeitsbehältnis umlaufendes Arbeitswerkzeug ankuppelbar und durch die Abtriebswelle 155 antreibbar. Die Abtriebswelle 155 ist mittels zweier Rillenkugellager 163 in der Getriebeeinheit 119 drehbar gelagert, wie nachfolgend erläutert ist. Dabei ist das obere Kugellager 163 mit einer Dichtscheibe versehen.

Konzentrisch zum ersten Zahnriemenrad 157 ist in der Getriebeeinheit 119 ein zweites Zahnriemenrad 165 drehbar gelagert. Dies weist zur Belüftung der Getriebeeinheit 119 umfangsmäßig verteilte, sich nach oben erstreckende Kühlrippen 167 auf. Das zweite Zahriemenrad 165 stützt sich über eine innere Lagerschale 169 und eine äußere Lagerschale 171 des Hohlrades 151 durch ein dazwischen angeordnetes, offenes Schrägkugellager an dem Hohlrad 151 ab. Das Schrägkugellager weist in an sich bekannter Weise einen inneren Lagerring 173, einen äußeren Lagerring 175 und dazwischen einen Kugelhalter 177 mit den entsprechenden Lagerkugeln auf. Auf das zweite Zahnriemenrad 165 ist ein hülsenförmiges Sonnenrad 179 drehfest gesteckt und axial dazu durch einen in einer Nut des Sonnenrades 179 gepreßten Zackenring 181 gesichert. An ihrem oberen Endabschnitt ist das Sonnenrad 179 an seiner inneren Umfangsseite mit einer zweiten, sich nach oben bis neben die erste Kupplungsbuchse 161 erstreckenden, Kupplungsbuchse 185 mit Innenverzahnung verbunden. Das Sonnenrad 179 und die zweite Kupplungsbuchse 185 stützen sich über zwei weitere offene Schrägkugellager 187 in der Getriebeeinheit 119 nach außen ab. Zum Schutz der Getriebeeinheit 119 bzw. der Lagerelemente ist um die zweite Kupplungsbuchse 185 ein Dichtring 189 gelegt. Auf der unteren, ersten Innenverzahnung 153 des Hohlrades 151 laufen vier erste Planetenzahnräder 191, die von dem Sonnenrad 179 angetrieben werden. Die Planetenzahnräder 191 drehen sich jeweils um erste Nadelrollen 195, die in einen ringförmigen unteren Bereich eines ersten Planetenträgers 197 und in einem damit fest verbundenen Verstärkerring 193 drehfest eingepreßt sind. Der erste Planetenträger 197 ist mit einer hülsenförmigen dritten Kupplungsbuchse 201 fest verbunden, deren Verzahnung radial nach außen ragt. Zum Abdichten der Getriebeeinheit 119 ist auch auf die dritte Kupplungsbuchse 201 ein Dichtring 203 gesteckt. Die dritte Kupplungsbuchse 201 stützt sich über ein offenes Schrägkugellager 205 an einer vierten Kupplungsbuchse 211 und letztlich an dem Hohlrad 151 der Getriebeeinheit 119 ab, wie nachfolgend erläutert.

Der erste Planetenträger 197 weist umfangsseitig eine Außenverzahnung 206 auf, auf der drei zweite Planetenzahnräder 207 abrollen. Diese drehen sich jeweils, von dem als Sonnenrad dienenden ersten Planetenträger 197 angetrieben, um zweite Nadelrollen 209, die von unten in einen zweiten Planetenträger 211 gesteckt sind. Dessen oberer Endabschnitt ist als vierte Kupplungsbuchse 211 ausgebildet. Der zweite Planetenträger 211 stützt sich über Kugeln 213 am oberen Endabschnitt des Hohlrades 151 ab.

Die Getriebeeinheit 119 besteht aus der metallischen Abtriebswelle 155, die ohne direkten Verzahnungseingriff in einem spielfrei montierten, zweistufigen Planetengetriebe aus Kunststoff gelagert ist (Fig. 7). Zwischen dem Kunststoffgetriebe und der Abtriebswelle 155 ist ein axiales Spiel 215 vorgesehen, um die unterschiedlichen Längenausdehnungskoeffizienten von Metall und Kunststoff in der Getriebeinheit 119 ausgleichen zu können. Die Abtriebswelle 155 dreht sich ohne Übersetzung im wesentlichen mit der Drehzahl der Motorwelle 31 wie auch die Zwischenwelle 97. Bei einer Motordrehzahl unter Last beträgt die Drehzahl der Abtriebswelle 155 dann etwa 8000 bis 12000 Umdrehungen pro Minute. Das Übersetzungsverhältnis des zweiten Abtriebes bzw. der zweiten Kupplungsbuchse 185 beträgt etwa 5:1. Die weiteren Übersetzungsverhältnisse betragen jeweils im Verhältnis zur jeweiligen Eingangsstufe für die dritte Kupplungsbuchse 201 etwa 3,8:1 und für die vierte Kupplungsbuchse 211 etwa 3,1:1. Damit ergeben sich für die vier Abtriebe Drehzahlen von etwa 12.000, 2.400, 630 und 200 Umdrehungen pro Minute. Zusätzlich ist auch die Motordrehzahl abgestuft einstellbar. Dadurch sind im Bereich der vier Abtriebe bzw. Kupplungsbuchsen alle üblichen Arbeitsbehältnisse an einer Stelle auf der Küchenmaschine abstellbar und alle für den normalen Gebrauch der Küchenmaschine üblichen Arbeitsvorgänge ohne Zusatzgetriebe der Arbeitswerkzeuge durchführbar.

Das Planetengetriebe der Getriebeeinheit 119 ist zweistufig aufgebaut. Um die kostengünstigen offenen Schrägkugellager 187 und 205 verwenden zu können, ist die Getriebeeinheit 119 von oben durch die zweite Kupplungsbuchse 185 und von unten durch das Sonnenrad 179 eingefaßt, die beide spielfrei miteinander verbunden sind. Das weitere offene Schrägkugellager 173, 175, 177 ist dann mit Hilfe des Zackenrings 181 von unten in der Getriebeeinheit 119 spielfrei gehalten.

## Patentansprüche

1. Elektrische Küchenmaschine (1) mit einem Gehäuse, in dem ein Elektromotor (29) mit einer Motorwelle angeordnet ist, die über ein Getriebe zumindest zwei konzentrische Abtriebe (155, 185) mit unterschiedlicher Drehzahl antreibt, deren gemeinsame Drehachse räumlich von der Motorwelle beabstandet ist, und an welche Abtriebe (155, 185) in einem auf dem Gehäuse abstellbaren Arbeitsbehältnis umlaufende Arbeitswerkzeuge kuppelbar sind, wobei der schnellste, erste Abtrieb (155) mit einer für ein Mixerwerkzeug geeigneten Drehzahl dreht, und wobei das Getriebe zumindest zwei unabhängig voneinander drehbar gelagerte Getriebeeingangsverzahnungen (157, 165) aufweist, so daß der erste Abtrieb (155) außer direktem Eingriff mit dem langsameren zweiten Abtrieb (185) antreibbar ist, dadurch gekennzeichnet, daß das Getrieb ein Planetengetriebe aufweist, das den zweiten Abtrieb (185) mit einem konzentrischen dritten Abtrieb (201) verbindet und daß der zweite Abtrieb ein Sonnenrad (179, 185) des Planetengetriebes bildet.

2. Elektrische Küchenmaschine nach Anspruch 1, dadurch gekennzeichnet, daß das Planetengetriebe mehrstufig ausgebildet ist.

3. Elektrische Küchenmaschine nach Anspruch 2, **dadurch gekennzeichnet**, daß die Welle (155) des ersten Abtriebes im Inneren einer als Hohlwelle ausgebildeten Welle des zweiten Abtriebes (179, 185) gelagert ist.

4. Elektrische Küchenmaschine nach einem der vorhergehenden Ansprüche, **dadurch gekennzeichnet**, daß der erste Abtrieb (155) mittels mindestens eines ersten Riemens (95, 99) mit der Motorwelle (31) verbunden ist.

5. Elektrische Küchenmaschine nach einem der vorhergehenden Ansprüche , **dadurch gekennzeichnet**, daß der zweite Abtrieb (185) mittels mindestens eines zweiten Riemens (95, 101) mit der Motorwelle (31) verbunden ist.

6. Elektrische Küchenmaschine nach einem der vorhergehenden Ansprüche , **dadurch gekennzeichnet**, daß die Drehzahlen der konzentrischen Abtriebe (155, 185, 201, 211) von innen nach außen abnimmt.

7. Elektrische Küchenmaschine nach einem der vorhergehenden Ansprüche , **dadurch gekennzeichnet**, daß die konzentrischen Abtriebe (155, 185, 201, 211) mit Drehzahlen zwischen etwa 200 bis 12000 Umdrehungen pro Minute drehen.

8. Elektrische Küchenmaschine nach einem der vorhergehenden Ansprüche , **dadurch gekennzeichnet**, daß die konzentrischen Abtriebe (155, 185, 201, 211) den gleichen Drehsinn aufweisen.

9. Elektrische Küchenmaschine nach einem der vorhergehenden Ansprüche , **dadurch gekennzeichnet**, daß der erste Abtrieb (155) im wesentlichen mit der Drehzahl der Motorwelle (31) dreht.

10. Elektrische Küchenmaschine nach einem der vorhergehenden Ansprüche , **dadurch gekennzeichnet**, daß die Küchenmaschine vier konzentrische Abtriebe (155, 185, 201, 211) aufweist.

## Claims

1. Electric kitchen machine (1) with a housing, in which an electric motor (29) with a motor shaft is arranged, which, by way of a transmission, drives at least two concentric drive take-offs (155, 185) at different rotational speed, the common rotational axis of which is three-dimensionally spaced from the motor shaft, and to which drive take-offs (155, 185) processing tools, which rotate in a processing container placeable on the housing, can be coupled, wherein the fastest, first drive take-off (155) rotates at a rotational speed suitable for a mixer tool and wherein the transmission comprises at least two transmission input toothings (157, 165) rotatably mounted independently of one another, so that the first drive take-off (155) is drivable apart from direct engagement with the slower second drive take-off (185), characterised in that the transmission comprises a planetary gear, which connects the second drive take-off (185) with a concentric third drive take-off (201), and that the second drive take-off forms a sunwheel (179, 185) of the planetary gear.

2. Electric kitchen machine according to claim 1, characterised in that the planetary gear is constructed to be multi-staged.

3. Electric kitchen machine according to claim 2, characterised in that the shaft (155) of the first drive take-off is mounted in the interior of a shaft, which is constructed as a hollow shaft, of the second drive take-off (179, 185).

4. Electric kitchen machine according to one of the preceding claims, characterised in that the first drive take-off (155) is connected with the motor shaft (31) by means of at least one first belt (95, 99).

5. Electric kitchen machine according to one of the preceding claims, characterised in that the second drive take-off (185) is connected with the motor shaft (31) by means of at least one second belt (95, 101).

6. Electric kitchen machine according to one of the preceding claims, characterised in that the rotational speeds of the concentric drive take-offs (155, 185, 201, 211) decrease from the inside towards the outside.

7. Electric kitchen machine according to one of the preceding claims, characterised in that the concentric drive take-offs (155, 185, 201, 211) rotate at rotational speeds between about 200 to 12,000 revolutions per minute.

8. Electric kitchen machine according to one of the preceding claims, characterised in that the concentric drive take-offs (155, 185, 201, 211) have the same sense of rotation.

9. Electric kitchen machine according to one of the preceding claims, characterised in that the first drive take-off (155) rotates substantially at the rotational speed of the motor shaft (31).

10. Electric kitchen machine according to one of the preceding claims, characterised in that the kitchen machine comprises four concentric drive take-offs (155, 185, 201, 211).

## Revendications

1. Machine domestique électrique (1) comprenant un boîtier, dans lequel est disposé un moteur électrique (29) avec un arbre du moteur qui actionne, au moyen d'un mécanisme de transmission, au moins deux prises de mouvement concentriques (155, 185) à vitesses de rotation différentes, dont l'axe de rotation commun se trouve, dans l'espace, à distance de l'arbre du moteur, et des outils de travail rotatifs peuvent être couplés à ces prises de mouvement (155, 185) dans un récipient de travail pouvant être placé sur le boîtier, la première prise de mouvement, la plus rapide (155) tournant à une vitesse de rotation appropriée pour un outil de mixeur, et le mécanisme de transmission présentant au moins deux dentures d'entrée du mécanisme de transmission (157, 165) logées de manière à pouvoir tourner indépendamment l'une de l'autre, de sorte que la première prise de mouvement (155) peut être actionnée hors d'un engrenage direct avec la deuxième prise de mouvement plus lente (185), caractérisée en ce que le mécanisme de transmission présente un engrenage planétaire reliant la deuxième prise de mouvement (185) à une troisième prise de mouvement concentrique (201) et en ce que la deuxième prise de mouvement forme une roue solaire (179, 185) de l'engrenage planétaire.

2. Machine domestique électrique selon la revendication 1, caractérisée en ce que l'engrenage planétaire est conçu à plusieurs étages.

3. Machine domestique électrique selon la revendication 2, caractérisée en ce que l'arbre (155) de la première prise de mouvement est logé à l'intérieur d'un arbre conçu comme arbre creux de la deuxième prise de mouvement (179, 185).

4. Machine domestique électrique selon l'une des revendications précédentes, caractérisée en ce que la première prise de mouvement (155) est reliée à l'arbre du moteur (31) à l'aide d'au moins une première courroie (95, 99).

5. Machine domestique électrique selon l'une des revendications précédentes, caractérisée en ce que la deuxième prise de mouvement (185) est reliée à l'arbre du moteur (31) à l'aide d'au moins une deuxième courroie (95, 101).

6. Machine domestique électrique selon l'une des revendications précédentes, caractérisée en ce que les vitesses de rotation des prises de mouvement concentriques (155, 185, 201, 211) décroissent de l'intérieur vers l'extérieur.

7. Machine domestique électrique selon l'une des revendications précédentes, caractérisée en ce que les prises de mouvement concentriques (155, 185, 201, 211) tournent à des vitesses de rotation situées entre 200 et 12000 rotations par minute environ.

8. Machine domestique électrique selon l'une des revendications précédentes, caractérisée en ce que les prises de mouvement concentriques (155, 185, 201, 211) présentent le même sens de rotation.

9. Machine domestique électrique selon l'une des revendications précédentes, caractérisée en ce que la première prise de mouvement (155) tourne essentiellement à la vitesse de rotation de l'arbre du moteur (31).

10. Machine domestique électrique selon l'une des revendications précédentes, caractérisée en ce que la machine domestique présente quatre prises de mouvement concentriques (155, 185, 201, 211).
